# EUROPEAN PATENT APPLICATION

(11) **EP 3 150 976 A1**
(43) Date of publication of application: **05.04.2017**
(21) Application number: 15188247.9
(22) Date of filing: 02.10.2015
(51) Int. Cl.: G01F 1/692

(54) **FLOW SENSOR**

(71) Applicant: Sensirion AG, 8712 Stäfa (CH)
(72) Inventor: Braun, Stephan, 8712 Stäfa (CH); Kostner, Stefan, 8712 Stäfa (CH); Mahler, Lukas, 8712 Stäfa (CH)
(74) Representative: Schulz Junghans Patentanwälte PartGmbB

(57) **Abstract**

The invention relates to a flow sensor for measuring the flow of a medium, particularly a liquid, comprising: a semiconductor module (1) on which at least one temperature sensor (13a, 13b), a heat source (12) and electrical connection points (18) are integrated, a substrate (5) on which conductor paths (19) are provided, wherein the substrate (5) is configured to be at least partially arranged between the semiconductor module (1) and said medium, wherein each connection point (18) is connected to an associated conductor path, and wherein the heat source and the at least one temperature sensor is configured to be in thermal contact with said medium via said substrate (5) such that said substrate (5) forms a thermally conducting partition wall between the semiconductor module (1) and said medium. According to the invention, the partition wall (5a) comprises or is formed as a liquid crystal polymer. Furthermore, the invention relates to a method for manufacturing such a flow sensor.

## Description

The invention relates to a flow sensor and a method for manufacturing such a flow sensor.

It is known in the state-of-the-art to measure the flow velocity or the mass flow of a liquid or gaseous medium by means of a semiconductor module on which a thermal source and at least one temperature sensor are arranged. The flow leads to a change in the temperature distribution of the thermal source which can be measured using the at least one temperature sensor.

However, semiconductor modules of this kind are very sensitive. When in contact with certain liquids or gases, such modules can be easily contaminated or damaged. Furthermore, mechanical loads may damage the module. In some applications, the problem may further arise, that the medium that is to be measured can be contaminated by the semiconductor module. Therefore, the semiconductor modules have to be separated from the medium by means of protective layers, for instance, which is difficult to achieve however.

Usually, a flow sensor of the afore-mentioned kind comprises a semiconductor module on which at least one temperature sensor, a heat source and electrical connection points are integrated, a substrate on which conductor paths are provided, wherein the substrate is configured to be at least partially arranged between the semiconductor module and said medium, wherein each connection point is connected to an associated conductor path, and wherein the heat source and the at least one temperature sensor are configured to be in thermal contact with said medium via said substrate such that said substrate forms a thermally conducting partition wall between the semiconductor module and said medium,

Concerning the substrate it has been discovered that many materials are inferior since they are not completely impermeable for the medium to be measured, but take up liquid/medium, particularly water, which deteriorates the function of the flow sensor, since it alters the thermal behavior of the sensor.

Therefore, the problem underlying the present invention is to provide a flow sensor of the aforementioned kind that allows a stable operation of the sensor.

This problem is solved by a flow sensor having the features of claim 1.

Preferred embodiments of the present invention are stated in the corresponding sub claims and are described below.

According to claim 1 the partition wall comprises or consists of a liquid crystal polymer (also denoted as LCP).

Further, the partition wall may be formed out of the liquid crystal polymer.

Further, the complete substrate may comprise or may be formed out of said liquid crystal polymer.

Further, the substrate may comprise several layers, wherein at least one layer or region of the substrate forming said partition wall is formed out of said liquid crystal polymer. Particularly, the substrate may be formed as a single layer consisting of said liquid crystal polymer.

Particularly, the partition wall is configured to contact the medium to be measured.

Liquid crystallinity in polymers can be achieved for instance by dissolving a polymer in a solvent (lyotropic liquid-crystal polymers) or by heating a polymer above its glass or melting transition point (thermotropic liquid-crystal polymers). Liquid-crystal polymers can be present in melted/liquid or solid form.

It has been surprisingly found, that LCPs are water-repellent or moisture resistant to a degree that allows them to be used within a flow sensor according to the invention as substrate or as a material for such a substrate, while many other materials that are usually used as substrate have been found to deteriorate the performance of the flow sensor.

According to a preferred embodiment of the present invention, the liquid crystal polymer is an aromatic polyester, preferably a fully aromatic polyester.

Further, according to a preferred embodiment of the present invention the aromatic polyester is preferably a copolymer comprising a 4-hydroxybenzoic acid residue and/or 6-hydroxynaphtene-2-carboxylic acid.

According to another preferred embodiment, the aromatic polyester is a compound characterized by formula I 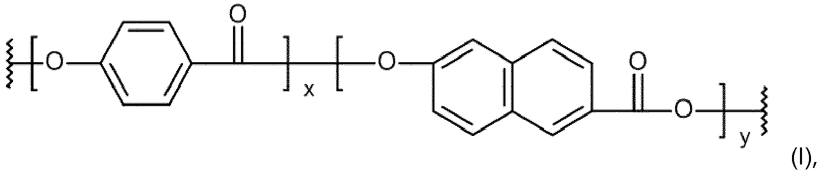 wherein x and y are independent from each other integers ≥1.

According to another preferred embodiment, the aromatic polyester is a 4-hydroxybenzoic acid/6-hydroxynaphtene-2-carboxylic acid copolymer (CAS Registry Number 70679-92-4).

Likewise, a preferred aromatic polyester may be obtained by polycondensation of 4-hydroxy benzoic acid with an aromatic hydroxycarboxylic acid, preferable with 6-hydroxyhydronaphtalene-2-carboxylic acid.

Preferably, the substrate is arranged between the semiconductor module and the medium and forms a partition wall that is thermally conductive so that a measurement can be conducted through the substrate.

Preferably, conductor paths are arranged on the substrate, which conductor paths are connected to contact points of the semiconductor module so that the substrate also plays the role of a circuit board which advantageously reduces the number of components of the flow sensor and therefore simplifies manufacturing of the flow sensor according to the invention. The semiconductor module can be soldered onto the substrate, preferably by means of a flip-chip-technique.

Preferably, besides the semiconductor module, the substrate may receive further electronic components such as for instance digital memories, coils or capacitors.

Preferably, the substrate is formed as an electrically insulating foil, on which foil the conductor paths are arranged. Preferably, the foil is a flexible foil. Such foils are available for different applications and can be used in standardized manufacturing processes.

Preferably, the foil consists of or comprises a liquid crystal polymer, e.g. an LCP as described above.

Furthermore, according to a further aspect of the present invention, the invention relates to a method for manufacturing a flow sensor as described herein.

In this method for producing the flow sensor according to the invention a semiconductor module is provided, on which at least a temperature sensor, a thermal source and electrical contact points are integrated, wherein the method further comprises the steps of providing a substrate comprising a liquid crystal polymer (e.g. as described herein), providing conductor paths on the substrate, and arranging the substrate as a partition wall between the semiconductor module and a medium that is to be measured and providing electrical connections between the semiconductor module and the conductor paths of the substrate.

Preferably, the semiconductor module is connected to the conductor paths of the substrate by means of a flip-chip technique. Such a technique is for instance described in "Advanced Flip Chip Packaging", Ho-Ming Tong, Yi-Shao Lai, C.P. Wong, Springer, 2013, ISBN 978-1-4419-5767-2.

The present invention is particularly suited for measuring the flow of a liquid, but may also be used for measuring the flow of the gas.

Further embodiments, features and advantages of the present invention will be described below with reference to the Figures, wherein
- Fig. 1: shows a cross sectional view of a flow sensor according to the invention along the channel;
- Fig. 2: shows a cross sectional view along the line II-II of Fig. 1 across the channel;
- Fig. 3: shows a view of the semiconductor module of the sensor according to Figs. 1 and 2 from the side of the substrate;
- Fig. 4: shows a plan view under the substrate with the components arranged thereon; and
- Fig. 5: shows a further embodiment of the flow sensor according to the invention.

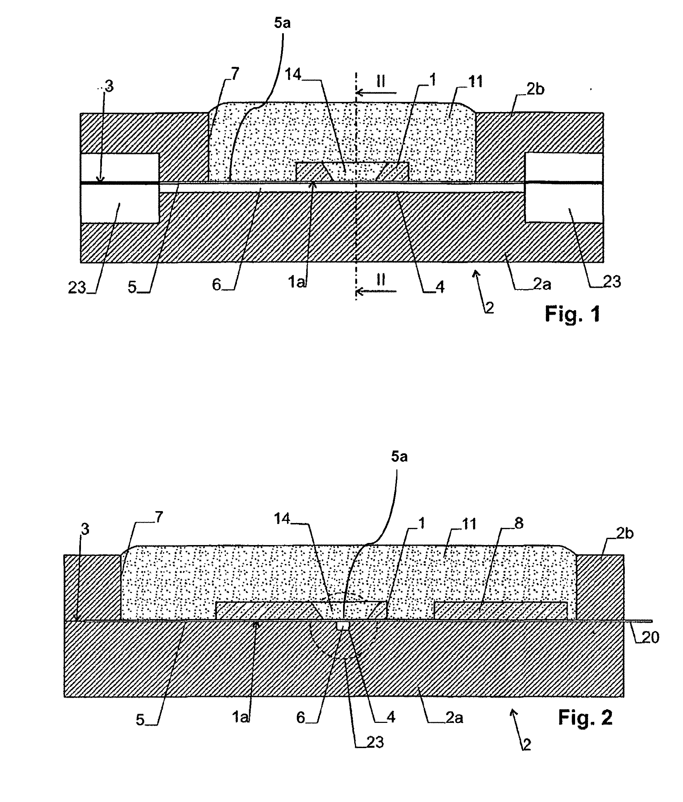

The basic construction of the flow sensor can be seen from Figs. 1 and 2 which show an embodiment of the flow sensor according to the present invention. The flow sensor comprises a semiconductor module 1, which is arranged in a housing 2. The housing 2 comprises a first housing part 2a and second housing part 2b, wherein for instance both housing parts 2a, 2b can be injection moulded out of plastic.

The first housing part 2a comprises an essentially flat upper side 3 in which a straight groove or indentation 4 extends. The second housing part 2b rests on the upper side 3 of the first housing part 2a. A foil-like substrate 5 is arranged, particularly clamped, between the two housing parts 2a, 2b. The substrate 5 is connected to both housing parts 2a, 2b for instance by means of welding or gluing, so that the medium cannot pass through in between the two parts. Thus, the groove 4 forms, together with the substrate 5, a channel 6 for the medium to be measured.

The semiconductor module 1 is arranged on the substrate 5. A central opening 7 extends through the second housing part 2b, in which opening 7 the semiconductor module 1 and particularly also other possible components 8, 9, 10 which may be arranged on the substrate reside. The opening 7 and thus the region around the semiconductor module 1 is filled with a cured filling compound 11 that reaches the substrate 5. The filling compound 11 provides stability to the semiconductor module 1, the substrate 5, and the other possible components 8, 9, 10.

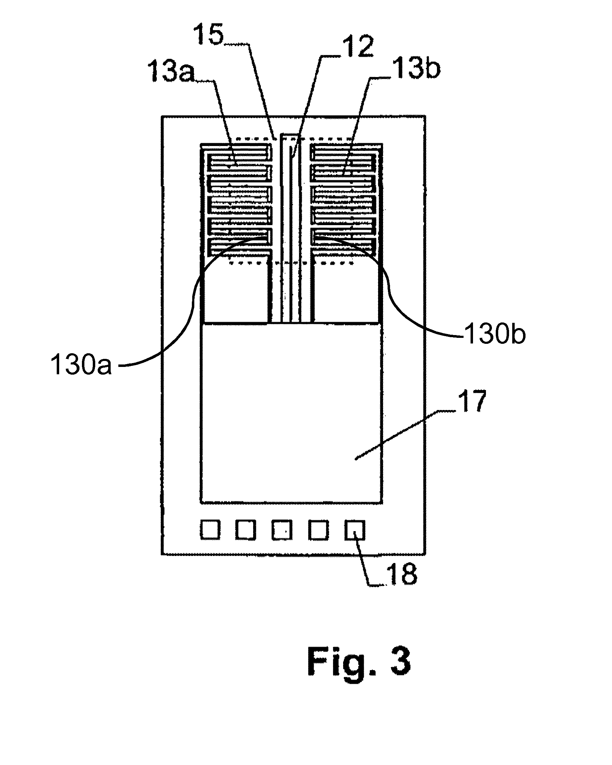

As can be seen from Fig. 3, an integrated circuit is arranged on a component side 1a of the semiconductor module 1, particularly using a CMOS technique. This integrated circuit comprises a thermal source 12, particularly in form of a resistor. Further, two temperature sensors 13a, 13b are arranged in front of the thermal source 12 and behind the latter in the flow direction of the medium. In the present preferred embodiment, the temperature sensors 13a, 13b are formed as thermopiles, respectively. An opening 14 is etched into the semiconductor module 1 which is covered by a thin dielectric membrane 15. The thermal source 12 as well as the contact rows of the thermopiles 13a, 13b on the side of the thermal source 12 are arranged on the membrane 15. Due to this arrangement, the thermal conduction between the thermal source 12 and the temperature sensors 13a, 13b is reduced.

The thermal source 12 and the thermopiles 13a, 13b are provided with a dielectric passivation coat (not shown), for instance silicon oxide or silicon nitride.

The thermal source 12 and at least the inner contact rows of the thermopiles 13a, 13b or their passivation coats are in thermal contact with the substrate 5.

They can directly contact the substrate 5 or can be separated by the substrate 5 by means of a thin layer of an adhesive material, thermally conductive paste, or solder.

Furthermore, an analyzing circuit 17 is arranged on the semiconductor module 1. This analyzing circuit 17 comprises for instance a preamplifier and an analog-to-digital converter and a digital processing stage, for instance for linearizing and scaling the signal of the thermopiles 13a, 13b as well as the control of the thermal source 12.

For making an electrical connection to the outside world the integrated circuit further comprises connection points 18.

The analyzing circuit 17 is configured to operate the thermal source 12 with a constant current, a constant temperature, a constant voltage, or pulsed. Furthermore, the analyzing circuit 17 is configured to measure the difference Δ of the temperature differences over the thermopiles 13a, 13b. Since the outer contact rows of the thermopiles 13 are essentially on the same temperature level, the difference Δ corresponds essentially to the temperature difference at the inner contact rows 130a. 130b.

During operation the thermal source 12 generates a temperature distribution in the wall of the channel 6. Due to the flow of the medium in the channel 6 this temperature distribution becomes asymmetric so that the difference Δ of the temperature differences provides a measure for the flow velocity. From this value the analyzing circuit 17 derives the suitable measuring value.

The substrate 5 has several functions within the present invention. On the one hand, the substrate 5 forms, as already mentioned, a partition wall 5a for the channel 6 and closes the channel 6 upwards. Furthermore, the substrate 5 transfers the heat signals between the semiconductor module 1 and the medium that is to be measured. Finally, it forms a conductor path foil for electrically contacting the semiconductor module 1.

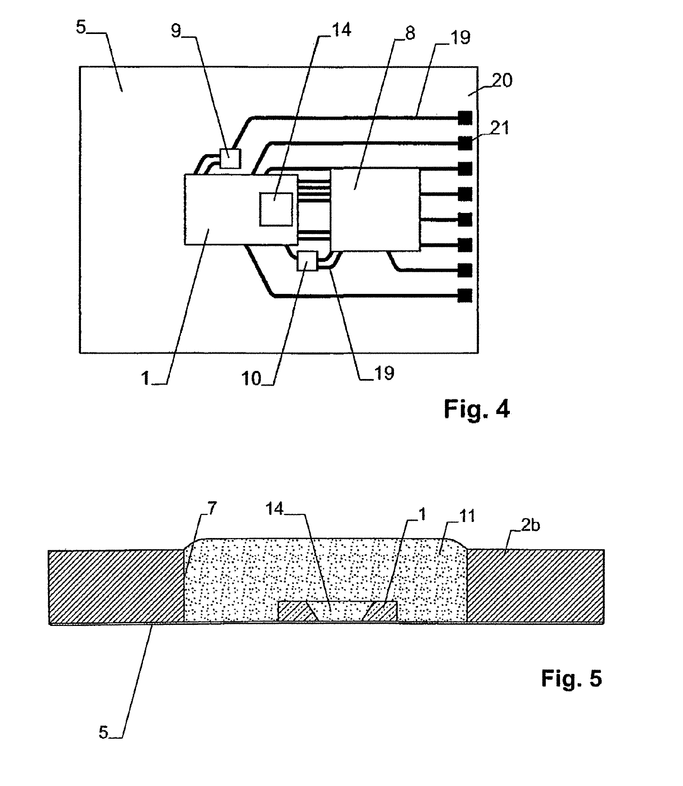

For this, as shown in Fig. 4, conductor paths 19 are arranged on the substrate 5, as exemplary shown in Fig. 4. The conductor paths 19 are connected to contact points 18 of the semiconductor module 1, preferably via solder connections.

Further components, as already mentioned, can be arranged on the substrate 5, for instance an external ROM 8 for the analyzing circuit 17 or passive components 9, 10, for instance capacitors or coils. These components can also be connected to the conductor paths 19 of the substrate 5.

In an edge region 20 of the substrate 5, the conductor paths 19 form contact areas 21. As can be seen from Fig. 2, the edge region 20 protrudes laterally from the housing 2 (or from the housing parts 2a, 2b) so that the contact areas 21 are accessible for making contact to the flow sensor.

For connecting tubes or hoses for the medium to the sensor, two cylindrical openings 23 are provided in the housing 2, which are essentially arranged concentrically to the channel 6. These openings 23 can be pre-formed into the housing parts 2a, 2b or can be drilled into the sensor after production of the sensor.

Upon producing the sensor, at first the housing parts 2a, 2b of the semiconductor module 1, the remaining possible components 8, 9, 10 as well as the substrate 5 are manufactured. Preferably, the substrate 5 consists of or comprises a foil on which conductor paths 19 are arranged using a known technique. Preferably, the substrate 5 or at least the partition wall 5a may be flexible and consists of or comprises an electrically non-conducting liquid crystal polymer as described herein and preferably, according to an embodiment of the present invention, comprises a thickness between 10 and 200 µm. The substrate 5 should be non-permeable for the medium to be measured (at least in a region 5a where it covers said channel 6), so that it forms a partition wall 5a between the channel 6 and the semiconductor module 1.

After manufacturing the individual parts of the sensor, for instance the semiconductor module 1 and the components 8, 9, 10 can be attached to the substrate 5, which is preferably achieved by using a flip-chip method (or another suitable technique). For this, the contact points 18 are connected to the conductor paths 19 via solder drops. Additionally, in order to guarantee a good thermal contact, thermal bridges can be arranged between the thermal source 12 and the substrate 5, as well as between the contact rows of the thermopiles 13, 13 on the side of the thermal source 12, for instance in the form of a layer of a thermally conductive paste or in form of a metal.

Now, the substrate 5 can be connected to the housing parts 2a, 2b. Preferably, this is achieved by means of gluing or welding (or another suitable method), so that a sealed connection is established.

Finally, the filling compound 11 is filled into the opening 7 and cured.

It is also conceivable that the substrate 5 is at first arranged between the housing parts 2a, 2b, or is at least connected to one of the housing parts 2a, 2b before the semiconductor module 1 and the components 8, 9, 10 are arranged thereon.

In the embodiment described so far, the substrate 5 has been manufactured separately from the housing parts 2a, 2b. It is however also conceivable to form the substrate 5 integrally with one of the housing parts 2a, 2b. For instance, the substrate 5 can be formed by the upper side of the first housing part 2a, wherein in this case the housing part 2a is manufactured, e.g. injection molded, such that a membrane forms above the channel 6. However, forming the substrate as a separate foil has the advantage that conventional manufacturing methods for forming the conductor paths 19 on the substrate can be used.

According to a further embodiment of the present invention which is shown in Fig. 5, the housing part 2a of the flow sensor comprising the channel 6 can also be omitted. Such a flow sensor is especially suited for direct placement in the medium that is to be measured. Particularly, such a sensor can be used for measuring the velocity of a boat.

## Claims

1. A flow sensor for measuring the flow of a medium, particularly a liquid, comprising:
- a semiconductor module (1) on which at least one temperature sensor (13a, 13b), a heat source (12) and electrical connection points (18) are integrated,
- a substrate (5) on which conductor paths (19) are provided, wherein the substrate (5) is configured to be at least partially arranged between the semiconductor module (1) and said medium, wherein each connection point (18) is connected to an associated conductor path, and wherein the heat source and the at least one temperature sensor is configured to be in thermal contact with said medium via said substrate (5) such that said substrate (5) forms a thermally conducting partition wall (5a) between the semiconductor module (1) and said medium,
**characterized in that**
the partition wall (5a) comprises a liquid crystal polymer or is formed out of a liquid crystal polymer.

2. The flow sensor of claim 1, **characterized in that** the liquid crystal polymer is an aromatic polyester.

3. The flow sensor of claim 1 or 2, **characterized in that** the flow sensor comprises a first housing part (2a) comprising a groove (4), wherein said groove (4) is covered by said substrate (5) so that a channel (6) for receiving said medium is formed.

4. The flow sensor of claim 3, **characterized in that** the substrate (5) is attached to the first housing part (2a), particularly glued to the first housing part (2a) or welded to the first housing part (2a).

5. The flow sensor of claim 3 or 4, **characterized in that** the flow sensor comprises a second housing part (2b), wherein at least a portion of the substrate (5) is arranged, preferably clamped, between the first and the second housing part (2a, 2b).

6. The flow sensor of one of the preceding claims, **characterized in that** besides the semiconductor module (1), at least one further electronic component (8, 9, 10) is arranged on the substrate (5) and connected to at least one of the conductor paths (19).

7. The flow sensor according to one of the preceding claims, **characterized in that** the semiconductor module (1) is soldered onto the substrate (5).

8. The flow sensor according to one of the preceding claims, **characterized in that** the substrate (5) comprises a foil supporting said conductor paths (16), wherein the foil is electrically insulating, and wherein preferably the foil is flexible.

9. The flow sensor according to one of the preceding claims, **characterized in that** the substrate (5) is impermeable for said medium and/or repellent for said medium.

10. The flow sensor according to one of the preceding claims, **characterized in that** the flow sensor comprises a channel (6) for the medium, wherein a wall of said channel (6) is formed by a foil, preferably a plastic foil, wherein the remaining walls are formed by at least one housing part (2a), wherein the foil supports the conductor paths (19), and wherein the foil is preferably formed out of said liquid crystal polymer or preferably comprises the latter.

11. The flow sensor according to one of the claims 1 to 9, **characterized in that** the flow sensor comprises a channel (6) for the medium, wherein the channel (6) and the substrate (5) are integrally formed by a housing part.

12. The flow sensor according to one of the preceding claims, **characterized in that** the partition wall (5a) comprises a thickness between 10 µm and 200 µm.

13. The flow sensor according to one of the preceding claims, **characterized in that** the flow sensor comprises a housing (2) in which the semiconductor module (1) and a channel (6) are arranged, wherein the substrate (5) is guided out of the housing and comprises contacts (21) outside of the housing (2) for contacting the flow sensor.

14. The flow sensor according to one of the preceding claims, **characterized in that** the thermal source (12), the temperature sensor (13a, 13b) and the electrical contacts (18) are arranged on a component side (1a) of the semiconductor module (1), and wherein the semiconductor module (1) is arranged with the component side (1a) on the substrate (5).

15. The flow sensor according to one of the preceding claims, **characterized in that** the region around the semiconductor module (1) is filled with a cured filling compound (11) contacting the substrate (5).
